# EUROPEAN PATENT SPECIFICATION

(11) **EP 1 505 868 B1**
(45) Date of publication and mention of the grant of the patent: **12.12.2007**
(21) Application number: 03725966.0
(22) Date of filing: 22.05.2003
(51) Int. Cl.: A01K 1/12

(54) **DIVIDER FOR NECK RAIL**
TEILER FÜR NACKENSCHIENE
SEPARATEUR POUR BARRE DE COU

(30) Priority: 23.05.2002 SE 0201543
(43) Date of publication of application: 16.02.2005
(73) Proprietor: DeLaval Holding AB, 147 21 Tumba (SE)
(72) Inventor: ÖHMARK, Olle, S-911 21 Vännäs (SE)
(74) Representative: Kossmann, Jan Henrik
(86) International application number: PCT/SE2003/000832
(87) International publication number: WO 2003/098999

(56) References cited:
- FR-A1- 2 730 902
- US-A- 5 230 299
- US-A- 5 727 504
- US-A- 5 803 015
- US-A- 5 970 920

## Description

### TECHNICAL FIELD

The present invention relates to milking stall and in particular to milking stalls of herringbone type. More specifically the invention relates to positioning animals in such a stall.

### BACKGROUND OF THE INVENTION

A milking parlour generally consists of an array of individual stalls, each being designed to hold a single cow as she is being milked. The cows are walked into the parlour through an entry gate, and then each cow is directed to her respective stall. There an attendant washes her udders, attaches a milking unit, monitors and attends to the milking operation, disconnects the milking unit, and releases the cows so another group of cows can be milked. Of course, in accordance with modern milking technique; it is possible to instead utilize semi-automatic milking equipment, such as automatic disconnection or even robotic milking wherein the complete milking process is automated. In parlours of this type, the cows proceed in single file through the entry gate into the parlour, and can exit in gang fashion out the side of the parlour. Various schemes for milking parlours are known, including herringbone, diagonal, and parallel or side-by-side.

US 5,727,504 disclose a milking stand having a plurality of adjacent positions accommodating animals to be milked, it has a barrier at a rear end of the animals to be milked and a horizontal elongated locking component at a front end of the animals to be milked. The locking component has a first wave tube connected thereto and is mounted for vertical movement of the locking component and the first wave tube between a lower position wherein the locking component prevents the animals to be milked from exiting the milking stand and an upper position wherein the locking component does not present the animals to be milked from exiting the milking stand. The locking component is mounted for pivoting movement of the locking component and the first wave tube about a longitudinal axis to move the first wave tube into a generally vertical position and into a generally horizontal position when the locking component is in the lower position. Since the locking component needs to be removed upwards and is applied at the breast height on the animal a relatively complicate solution is needed to remove the locking component when the animal shall be allowed to walk out of the stand. Possibly it could even be a danger for the animals to be caught in the locking device when it is moved.

Another prior art solution is disclosed in US-A-5 230,299 (in the following D1). In the milking parlour design of D1 a cow inserts her head between a pair of parallel swing arms pivoted about an overhead pivot rail.

Consequently, a need exists in the art for a positioning device in a milking stall, which does not exhibit the problems according to the prior art above.

### SUMMARY OF THE INVENTION

It is a main object of the present invention to provide such an apparatus that position a milking animal in a substantially optimal position for milking.

These objects among others are, according to a first aspect of the present invention, attained by a milking stall in which milking animals are positioned side by side in milking position for milking, wherein said stall comprises a neck rail arranged to contribute to the positioning of said animals and wherein said neck rail comprises positioning members each being arranged to force milking animals to take a defined milking position.

In greater detail these objects are attained, according to a preferred embodiment of the invention, by a milking stall wherein said neck rail is arranged to prevent the forward motion of said milking animals during said milking and wherein said neck rail is arranged to be raised when said milking is finished so as to allow said animals to move forward out of said milking stall and further comprising a breast rail, wherein said breast rail is arranged to prevent the forward motion of said milking animals during said milking and said breast rail is arranged to be lowered so as to allow said animals to move forward out of said milking stall.

In greater detail these objects are attained, according to a preferred embodiment of the invention, by a milking stall wherein said positioning member is arranged to bear on a side of said animal to force said animal to take a position convenient for application of milking equipment.

In greater detail these objects are attained, according to a preferred embodiment of the invention, by a milking stall wherein said positioning members comprises a protruding member extending outwards from said neck rail substantially in the same direction as is preferred for said animal to take.

An advantage of the present invention is that milking animals are positioned in said milking stall in a substantially optimal way for milking.

Another advantage of the present invention is that convenient application of milking equipment is achieved for the operator.

Another advantage of the present invention is that the milking animals are positioned relatively fast whereby the complete milking operation is quicker.

Further characteristics of the invention and advantages thereof will be evident from the following detailed description of embodiments of the invention.

### BRIEF DESCRIPTION OF THE DRAWINGS

The present invention will become more fully understood from the detailed description of embodiments of the present invention given herein below and the accompanying Fig. la to 3, which are given by way of illustration only, and thus are not limitative of the present invention.
Figure la shows a top view of a milking stall according to a preferred embodiment of the invention.
Figure 1b shows a cross-sectional side view of the milking stall in figure 1a taken at the line A-A.
Figure 1c shows a cross-sectional side view of the milking stall in figure 1b taken at the line C-C.
Figure 2 shows an enlarged portion of figure la.
Figure 3 shows an enlarged portion of the neck rail and positioning member in figure lain a perspective view.

### PREFERRED EMBODIMENTS

In the following description, for purposes of explanation and not limitation, specific details are set forth, such as particular techniques and applications in order to provide a thorough understanding of the present invention. However, it will be apparent to one skilled in the art that the present invention may be practiced in other embodiments that depart from these specific details. In other instances, detailed descriptions of well-known methods and apparatuses are omitted so as not to obscure the description of the present invention with unnecessary details.

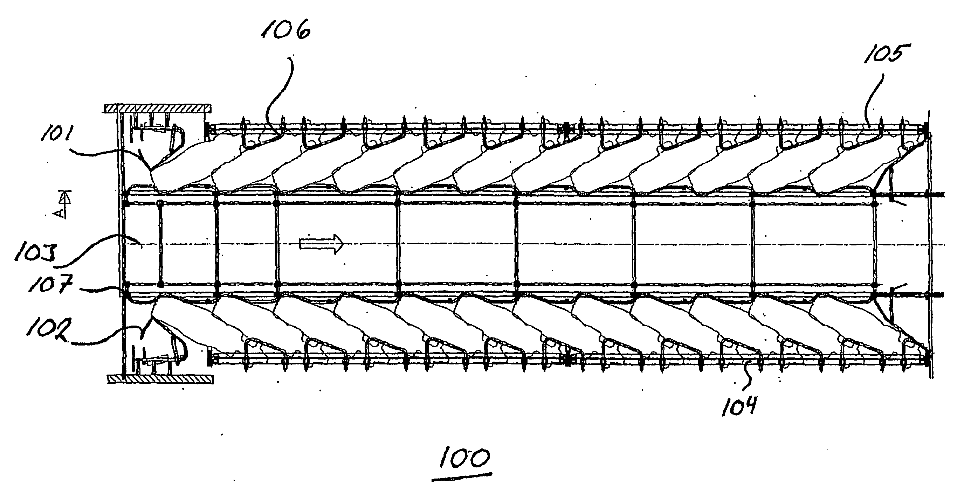

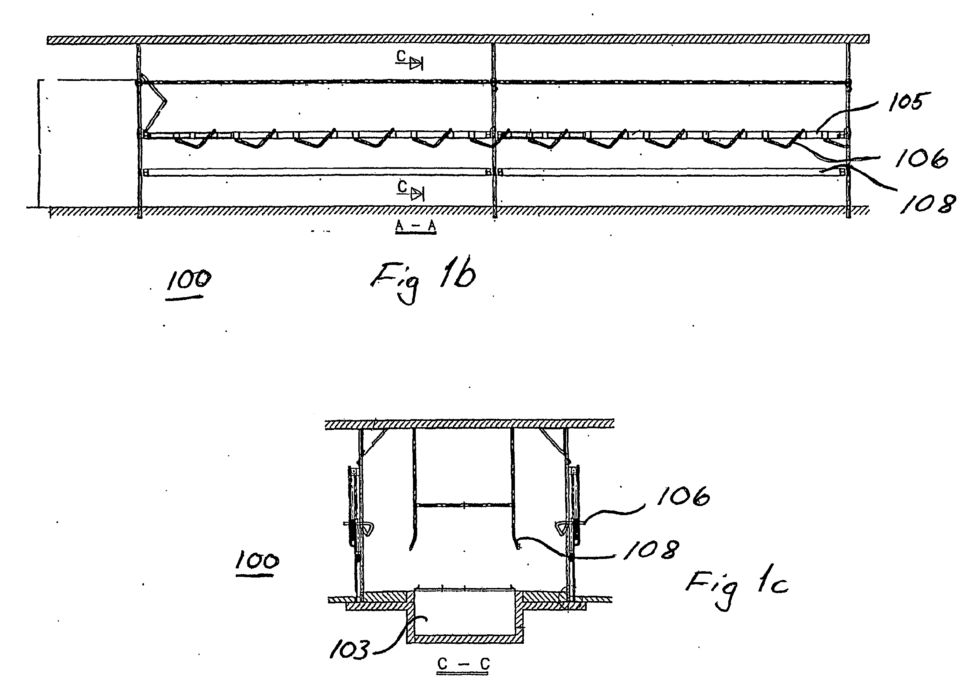

Figure 1a shows a top view of a milking stall according to a preferred embodiment of the invention. A number of milking animals, in this embodiment twenty-four animals, enters the milking stall generally denoted 100 through two entrance gates 101 and 102 located on each side of a milking pit 103. The entrance gates 101, 102 are shown closed in figure 1. The milking animals are conventionally arranged in the milking stall with their heads turned outwards and their rear end turned in against the milking pit 103 for convenient access by a milking operator (not shown) for application of milking equipment. The milking operator could be a manual operator applying the milking equipment onto the teats of the milking animals by hand or could be a milking robot for automatic application of the milking equipment.

In each case the positioning of the rear end of the milking animal is important. For automatic application of milking equipment the known position of the udder of the animal is vital for successful application of the milking equipment. For manual application it is important that the milking animals are positioned correctly to reduce work related injuries, to reduce the time for application and generally to ease the work situation for the milking operator.

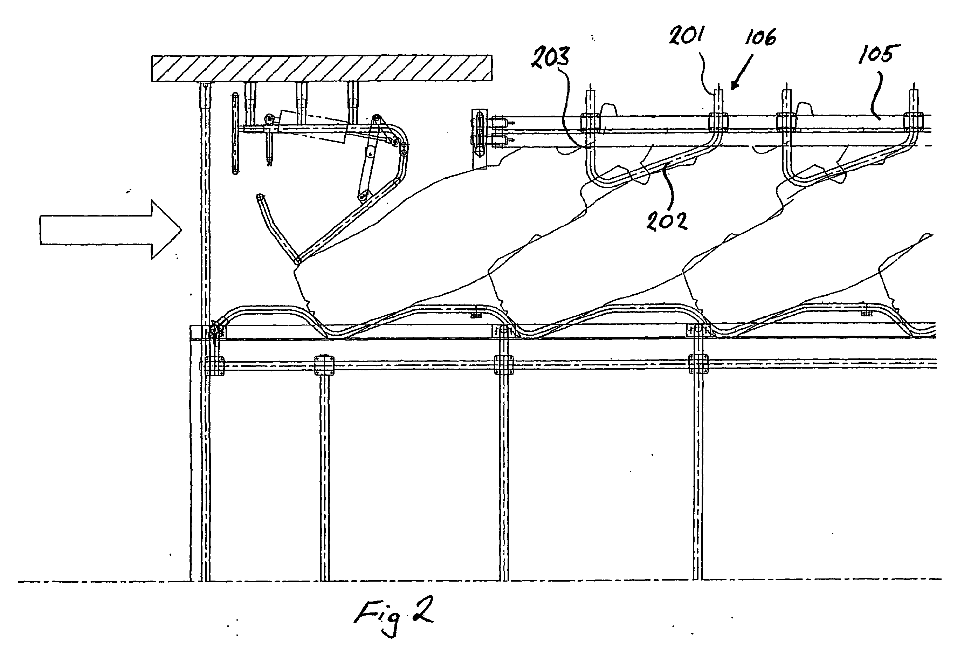

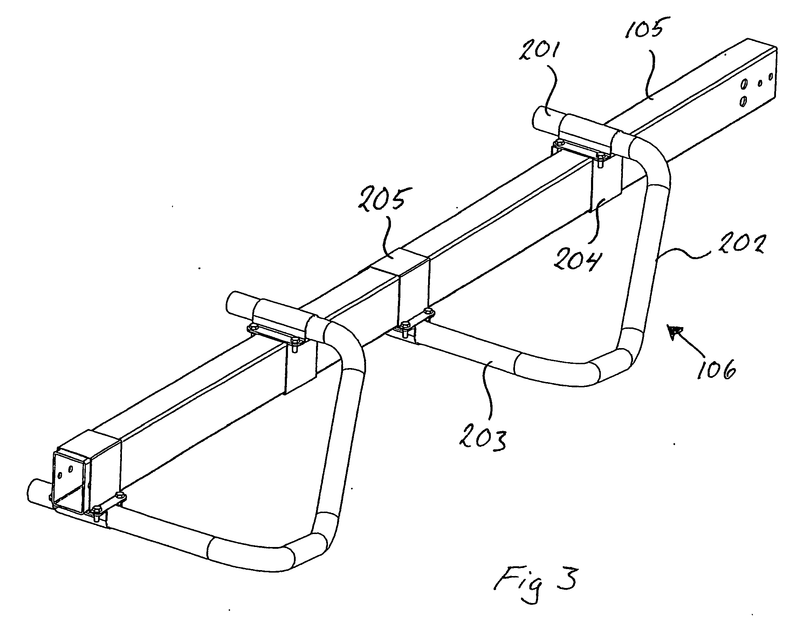

Neck rails denoted 104 and 105 respectively runs along each side of the milking stall 100. Each neck rail 104, 105 comprises a number of positioning members 106, one for each milking position apart from the last milking position. The entrance gate 101 and 102 positions the last milking animal, respectively. A rear rail 107 comprises defined positions for the rear end of each animal. The rear rail 107 is curved so as to define a bay for each milking position. The bay is suitably designed to fit a rear end of a milking animal thereby achieving said defined positions. The positioning members 106 protrudes or extends out from the neck rail generally in a direction which is desired for the milking animal to take, it also extends somewhat downwards so as to bear against the shoulder of the milking animal. The positioning member is shown in greater detail in figures 2 and 3.

With reference to figure 1b, showing the milking stall 100 in a cross-sectional side view taken along line A-A, the neck rail 105 and positioning members 106 are shown, as well as a breast rail 108. When in milking position the milking animals stick their heads between the neck rail 105 and the breast rail 108 so that the breast rail 108 bear against the breast of the animal and the neck rail 105 bear against the neck. The positioning member 106 thus bears against the side of the milking animal and forces the animal to take the desired position quickly and efficiently.

The milking animals are allowed to leave the stall by raising the neck rail 105 and lowering the breast rail 108. By this arrangement all of the milking animals may substantially simultaneously leave the stall, which reduces the time for evacuation of the stall thereby allowing new animals to enter more quickly. However, since the milking animals need to pass over the breast rail 108 it is important that no obstacles are present in the path which could be the cause of injuries to the animals. The breast rail is therefore lowered into a recess in the floor and may consequently not comprise irregular structures of any complexity or size.

Since the neck rail 105 and the positioning member 106 do not comprise any parts located under the head of the milking animals it is simply to be raised upwards and the animals may evacuate safely.

Figure 1c shows the milking stall 100 in a cross-sectional side view taken at the line C-C. The positioning members 106 are shown as well as the rear rail 108.

Figure 2 shows an enlarged portion of figure 1a where the positioning member 106 is more clearly visible and figure 3 shows the neck rail with positioning members in a perspective view. As is clear from figure 2 and 3 the positioning member 106 comprises a first part 201 secured to an upper part of said neck rail 105. Said first part 201 is secured using an attachment member 204 for easy and flexible mounting of said first part 201 to said neck rail. Said first part 201 is connected to a protruding member 202 extending with an angle out from and in the direction of said neck rail 105. That is, the direction of a projection of the protruding member on a horizontal plane is at an angle to a projection of the neck rail on the same horizontal plane. The same is true for projections on a vertical plane. Said angle is selected to position the milking animal in the desired position. Said protruding member 202 is arranged to bear against a side of a milking animal to guide or force said animal into a defined milking position. Said protruding member 202 is connected to a second part 203 arranged substantially in orthogonal relation to said neck rail 105 and securely fastened to a lower part of said neck rail 105 using an attachment member 205. Thus, as described above, said protruding member 202 is also arranged with an inclination to the horizontal plane. Said second part 203 is arranged to bear against the neck or shoulder of a second milking animal to help guide said second animal into a defined milking position.

The second part 203 could also be connected to an upper part of said neck rail 105, or both said first part 201 and said second part 203 could be connected to a lower part of said neck rail 105, or alternatively could said first part 201 be connected to a lower part of said neck rail 105 and said second part 203 be connected to a upper part of said neck rail 105. Independent of the position of the first part 201 and the second part 203 with relation to the neck rail, it is preferable if the protruding member 202 has a downward inclination to bear against the side of said animal.

Said positioning member 106 may preferably be made of single steel tubing which is suitably bent to have the desired shape. However, other constructions may also be used such as steel bars welded together, square shaped tubing welded together etc. The positioning member may be secured to the neck rail by bolts, screws, clamps, welding or the like.

It will be obvious that the invention may be varied in a plurality of ways. Such variations are not to be regarded as a departure from the scope of the invention. All such modifications as would be obvious to one skilled in the art are intended to be included within the scope of the appended claims.

## Claims

1. A milking stall in which milking animals are positioned side by side in milking position for milking, wherein said stall (100) comprises a neck rail (104, 105) arranged to contribute to the positioning of said animals, wherein said neck rail (104, 105) comprises positioning members (106) each being arranged to force a first milking animal to take a defined milking position, **characterised in that**,
- said positioning member (106) comprises a first part (201), a protruding member (202) and a second part (203), and
- said second part (203) is arranged to bear on a neck of a second milking animal positioned next to said first milking animal.

2. A milking stall according to claim 1, wherein said neck rail (104, 105) is arranged to prevent the forward motion of said milking animals during said milking and wherein said neck rail (104, 105) is arranged to be raised when said milking is finished so as to allow said animals to move forward out of said milking stall (100).

3. A milking stall according to claim 1 or 2, further comprising a breast rail (108), wherein said breast rail (108) is arranged to prevent the forward motion of said milking animals during said milking and said breast rail (108) is arranged to be lowered so as to allow said animals to move forward out of said milking stall (100).

4. A milking stall according to any of claims 1 to 3, wherein said positioning member (106) is arranged to bear on a side of a first milking animal to force said first milking animal to take a position convenient for application of milking equipment.

5. A milking stall according to any of claims 1-4, wherein a first main direction of a projection of said protruding member (202) on a horizontal plane and a second main direction of a projection of said neck rail (104, 105) on a horizontal plane has an angle there between.

6. A milking stall according to any of claims 1-5, wherein a first main direction of a projection of said protruding member (202) on a vertical plane and a second main direction of a projection of said neck rail (104, 105) on a vertical plane has an angle there between.

7. A milking stall according to any of claims 1-6, wherein said protruding member (202) extends outwards from said neck rail (104, 105) substantially in the same direction as is preferred for said first milking animal to take.

8. A milking stall according to any of claims 1-7, wherein said protruding member (202) is also extending downwards from said neck rail (104, 105) to bear on a shoulder of said first milking animal.

9. A milking stall according to any of claims 1-8, wherein said first part (201) is arranged to be secured to an upper part of said neck rail (104, 105).

10. A milking stall according to any of claims 1-9, wherein said second part (203) is extending substantially in orthogonal relation to said neck rail (104, 105) and arranged to be secured to a lower part of said neck rail (104, 105).

11. A milking stall according to any of claims 1 to 10, wherein the position of a first animal at least partly guides the position of a second animal.

12. A milking stall according to any of claims 1 to 11, wherein said stall (100) is a herringbone stall having a first side and a second side with milking animals separated by a milking pit (103), said first side and second side comprises a neck rail (104, 105) having positioning members (106).

13. A milking stall according to any of claims 1 to 12, wherein said stall (100) comprises a rear rail (107) having defined positions for the rear end of said milking animals and wherein said positioning member (106) is arranged to force said animal into a position with the rear end of said animal in said position defined by said rear rail (107).

## Patentansprüche

1. Melkstand, in dem die Milchtiere nebeneinander in einer Melkposition zum Melken angeordnet sind, wobei der Stand (100) eine Nackenschiene (104, 105) umfasst, die zum Positionieren der Tiere beiträgt, wobei die Nackenschiene (104, 105) Positionierelemente (106) umfasst, von denen jedes dazu dient, ein erstes Milchtier in eine definierte Melkposition zu treiben, **dadurch gekennzeichnet, dass**
- das Positionierelement (106) einen ersten Teil (201) umfasst sowie ein vorstehendes Element (202) und einen zweiten Teil (203), und
- der zweite Teil (203) so angeordnet ist, dass er auf einem Nacken eines zweiten Milchtieres aufliegt, das sich neben dem ersten Milchtier befindet.

2. Melkstand nach Anspruch 1, wobei die Nackenschiene (104, 105) dazu dient, die Vorwärtsbewegung der Milchtiere während des Melkens zu verhindern, und wobei die Nackenschiene (104,105) so angeordnet ist, dass sie angehoben wird, wenn das Melken beendet ist, um es den Tieren zu erlauben, sich vorwärts aus dem Melkstand (100) zu bewegen.

3. Melkstand nach Anspruch 1 oder 2, weiterhin umfassend eine Brustschiene (108), wobei die Brustschiene (108) dazu dient, die Vorwärtsbewegung der Milchtiere während des Melkens zu verhindern, und wobei die Brustschiene (108) so angeordnet ist, dass sie abgesenkt wird, um es den Tieren zu erlauben, sich vorwärts aus dem Melkstand (100) zu bewegen.

4. Melkstand nach einem der Ansprüche 1 bis 3, wobei das Positionierelement (106) so angeordnet ist, dass es an einer Seite eines ersten Melktieres anliegt, um das erste Melktier in eine Position zu treiben, die sich zum Ansetzen der Melkausrüstung eignet.

5. Melkstand nach einem der Ansprüche 1-4, wobei eine erste Hauptrichtung eines Vorsprungs des vorstehenden Elementes (202) in einer horizontalen Ebene einen Winkel mit einer zweiten Hauptrichtung eines Vorsprungs der Nackenschiene (104, 105) in einer horizontalen Ebene bildet.

6. Melkstand nach einem der Ansprüche 1-5, wobei eine erste Hauptrichtung eines Vorsprungs des vorstehenden Elementes (202) in einer vertikalen Ebene einen Winkel mit einer zweiten Hauptrichtung eines Vorsprungs der Nackenschiene (104, 105) in einer vertikalen Ebene bildet.

7. Melkstand nach einem der Ansprüche 1-6, wobei sich das vorstehende Element (202) im Wesentlichen in derselben Richtung auswärts von der Nackenschiene (104, 105) erstreckt wie die Richtung, die das erste Milchtier bevorzugt einschlagen soll.

8. Melkstand nach einem der Ansprüche 1-7, wobei sich das vorstehende Element (202) auch abwärts von der Nackenschiene (104, 105) erstreckt, um auf einer Schulter des ersten Milchtieres aufzuliegen.

9. Melkstand nach einem der Ansprüche 1-8, wobei der erste Teil (201) so angeordnet ist, dass er an einem oberen Teil der Nackenschiene (104,105) gesichert wird.

10. Melkstand nach einem der Ansprüche 1-9, wobei sich der zweite Teil (203) im Wesentlichen orthogonal zur Nackenschiene (104, 105) erstreckt und so angeordnet ist, dass er an einem unteren Teil der Nackenschiene (104, 105) gesichert wird.

11. Melkstand nach einem der Ansprüche 1 bis 10, wobei die Position eines ersten Tieres mindestens teilweise die Position eines zweiten Tieres beeinflußt.

12. Melkstand nach einem der Ansprüche 1 bis 11, wobei der Stand (100) ein Fischgrätenstand ist, der eine erste Seite und eine zweite Seite mit Milchtieren aufweist, die durch eine Melkgrube (103) voneinander getrennt sind, wobei die erste Seite und die zweite Seite eine Nackenschiene (104, 105) mit Positionierelementen (106) umfassen.

13. Melkstand nach einem der Ansprüche 1 bis 12, wobei der Stand (100) eine hintere Schiene (107) umfasst, die definierte Positionen für das hintere Ende der Milchtiere aufweist, und wobei das Positionierelement (106) dazu dient, das Tier in eine Position zu treiben, wobei sich das hintere Ende des Tieres in der von der hinteren Schiene (107) definierten Position befindet.

## Revendications

1. Stalle de traite dans laquelle des animaux à traire sont positionnés côte à côte dans une position de traite pour être traits, ladite stalle (100) comprenant un rail de cou (104, 105) agencé pour contribuer au positionnement desdits animaux, ledit rail de cou (104, 105) comprenant des éléments de positionnement (106) étant chacun agencés pour forcer un premier animal à traire à adopter une position de traite définie, **caractérisée en ce que** :
- ledit élément de positionnement (106) comprend une première partie (201), un élément saillant (202) et une deuxième partie (203), et
- ladite deuxième partie (203) est agencée pour porter sur le cou d'un deuxième animal à traire positionné près dudit premier animal à traire.

2. Stalle de traite selon la revendication 1, dans laquelle ledit rail de cou (104, 105) est agencé pour empêcher le mouvement vers l'avant desdits animaux à traire durant ladite traite et dans laquelle ledit rail de cou (104, 105) est agencé pour être soulevé lorsque ladite traite est terminée afin de permettre auxdits animaux de progresser vers la sortie de ladite stalle de traite (100).

3. stalle de traite selon la revendication 1 ou 2, comprenant, en outre, un rail de poitrine (108), ledit rail de poitrine (108) étant agencé pour empêcher le mouvement vers l'avant desdits animaux à traire durant ladite traite et ledit rail de poitrine (108) étant agencé pour être abaissé afin de permettre auxdits animaux de progresser vers la sortie de ladite stalle de traite (100).

4. Stalle de traite selon l'une quelconque des revendications 1 à 3, dans laquelle ledit élément de positionnement (106) est agencé pour porter sur un côté d'un premier animal à traire pour forcer ledit premier animal à traire à adopter une position commode pour l'application de l'équipement de traite.

5. Stalle de traite selon l'une quelconque des revendications 1 à 4, dans laquelle une première direction principale d'une projection dudit élément saillant (202) sur un plan horizontal et une deuxième direction principale d'une projection dudit rail de cou (104, 105) sur un plan horizontal forment un angle entre elles.

6. Stalle de traite selon l'une quelconque des revendications 1 à 5, dans laquelle une première direction principale d'une projection dudit élément saillant (202) sur un plan vertical et une deuxième direction principale d'une projection dudit rail de cou (104, 105) sur un plan vertical forment un angle entre elles.

7. Stalle de traite selon l'une quelconque des revendications 1 à 6, dans laquelle ledit élément saillant (202) s'étend vers l'extérieur depuis ledit rail de cou (104, 105) sensiblement dans la même direction que celle qu'il est préféré que ledit premier animal à traire prenne.

8. Stalle de traite selon l'une quelconque des revendications 1 à 7, dans laquelle ledit élément saillant (202) s'étend également vers le bas depuis ledit rail de cou (104, 105) pour porter sur un épaulement dudit premier animal à traire.

9. Stalle de traite selon l'une quelconque des revendications 1 à 8, dans laquelle ladite première partie (201) est agencée pour être fixée à une partie supérieure dudit rail de cou (104, 105).

10. Stalle de traite selon l'une quelconque des revendications 1 à 9, dans laquelle ladite deuxième partie (203) s'étend sensiblement orthogonalement audit rail de cou (104, 105) et est agencée pour être fixée à une partie inférieure dudit rail de cou (104, 105).

11. Stalle de traite selon l'une quelconque des revendications 1 à 10, dans laquelle la position d'un premier animal guide au moins en partie la position d'un deuxième animal.

12. Stalle de traite selon l'une quelconque des revendications 1 à 11, dans laquelle ladite stalle (100) est une stalle en chevrons comportant un premier côté et un deuxième côté, les animaux à traire étant séparés par une fosse à traire (103), ledit premier côté et ledit deuxième côté comprenant un rail de cou (104, 105) comportant des éléments de positionnement (106).

13. Stalle de traite selon l'une quelconque des revendications 1 à 12, dans laquelle ladite stalle (100) comprend un rail arrière (107) ayant des positions définies pour l'extrémité arrière desdits animaux à traire et dans laquelle ledit élément de positionnement (106) est agencé pour forcer ledit animal jusque dans une position avec l'extrémité arrière dudit animal dans ladite position définie par ledit rail arrière (107).
